# EUROPÄISCHE PATENTSCHRIFT

(11) **EP 3 372 849 B1**
(45) Veröffentlichungstag und Bekanntmachung des Hinweises auf die Patenterteilung: **14.10.2020**
(21) Anmeldenummer: 18152734.2
(22) Anmeldetag: 22.01.2018
(51) Int. Cl.: F16C 11/06

(54) **SPHÄRISCHES LAGER ALS VERBINDUNG ZWISCHEN ZWEI FAHRZEUGEN ODER FAHRZEUGTEILEN**
SPHERICAL BEARING AS A CONNECTION BETWEEN TWO VEHICLES OR VEHICLE PARTS
PALIER SPHÉRIQUE EN TANT QUE RACCORDEMENT ENTRE DEUX VÉHICULES OU DEUX ÉLÉMENTS DE VÉHICULE

(30) Priorität: 10.03.2017 DE 202017101399 U; 21.03.2017 DE 202017101639 U
(43) Veröffentlichungstag der Anmeldung: 12.09.2018
(73) Patentinhaber: Hübner GmbH & Co. KG, 34123 Kassel (DE)
(72) Erfinder: GOEBELS, André, 34134 Kassel (DE); RICHTER, Olaf, 34323 Malsfeld-Beiseförth (DE)
(74) Vertreter: Patentanwälte Walther Hinz Bayer PartGmbB

(56) Entgegenhaltungen:
- WO-A1-2013/143582
- DE-A1-102015 213 758
- DE-U1-202015 100 906
- US-A- 3 208 290
- US-A1- 2004 028 302

## Beschreibung

Die Erfindung betrifft ein sphärisches Lager als gelenkige Verbindung zwischen zwei Fahrzeugen oder Fahrzeugteilen, umfassend ein erstes konvexes und ein zweites konkaves Lagerelement, wobei die Lagerelemente relativ zueinander beweglich miteinander verbunden sind, wobei zwischen den Lagerelementen mindestens eine Gleitfläche angeordnet ist, wobei die mindestens eine Gleitfläche durch mindestens eine umlaufende Dichtung abgedichtet ist, die mit beiden Lagerelementen in Verbindung steht.

Ein solches sphärisches Lager als Teil einer Gelenkverbindung zwischen zwei gelenkig miteinander verbundenen Fahrzeugen, zum Beispiel einem Gelenkbus oder einem Schienenfahrzeug, ist aus der WO 2013/143582 bekannt. Hierbei ist ein inneres konvexes Lagerelement vorgesehen, das von einem äußeren konkaven Lagerelement umgriffen wird. Zwischen den beiden Lagerelementen befindet sich eine Gleitfläche. Die Gleitfläche ist zu beiden Seiten durch jeweils eine umlaufende Dichtung abgedichtet. Beide Dichtungen sind in gleicher Weise jeweils mit dem äußeren konkaven Lagerelement einerseits und dem inneren konvexen Lagerelement verbunden. Zur Verbindung mit dem äußeren Lagerelement ist vorgesehen, dass das Lagerelement eine umlaufende Aussparung aufweist, in der die Dichtung mit ihrem einen Ende einliegt. Die Dichtung, die eine mäanderförmige Dichtungsreserve aufweist, um bei Bewegung des äußeren Lagerelements relativ zu dem inneren Lagerelement den entsprechenden Bewegungen nachgeben zu können, ist in dem konvexen Lagerelement in einer entsprechenden Nut klemmbar fixiert. Zwischen dem konvexen Lagerelement einerseits und der Dichtung andererseits ist in der Nut ein Gleitring vorgesehen, der korrespondierend zu der Nut in dem konvexen Lagerelement ausgebildet ist. Der Gleitring, der eine U-förmige Aussparung aufweist, nimmt die Dichtung mit einem an der Dichtung angeordneten Ansatz klemmbar auf. Es hat sich nunmehr herausgestellt, dass zwischen dem Gleitring und dem konvexen Lagerelement einerseits und dem Gleitring und der Dichtung andererseits in den dadurch abgedichteten Raum mit der Gleitfläche Feuchtigkeit eindringen kann, was zu Korrosion der Gleitfläche zwischen dem konvexen und dem konkaven Lagerelement führt. Bildet sich Rost im Bereich der Gleitfläche führt dies zwangsweise zu einem Austausch eines solchen sphärischen Lagers als Teil der Gelenkverbindung zwischen zwei Fahrzeugen oder Fahrzeugteilen.

Die der Erfindung zugrunde liegende Aufgabe besteht demzufolge darin, bei einem sphärischen Lager der eingangs genannten Art eine Abdichtung der Gleitfläche zwischen dem ersten konvexen und dem zweiten konkaven Lagerelement herbeizuführen, die dauerhaft den Eintritt von Feuchtigkeit in den abgedichteten Raum mit der Gleitfläche vermeidet.

Zur Lösung der Aufgabe ist erfindungsgemäß vorgesehen, dass die umlaufende Dichtung zur Verbindung mit dem mindestens einen Lagerelement durch zumindest eine formschlüssig wirkende Verbindungseinrichtung gehalten ist, wobei durchaus auch kraftschlüssige Anteile bei der Verbindung vorhanden sein können. Hieraus wird deutlich, dass im Gegensatz zu dem Stand der Technik gemäß der WO 2013/143582, in dem die Dichtung in dem ersten konvexen Lagerelement lediglich kraftschlüssig einliegt, nunmehr eine formschlüssige Verbindung zwischen der Dichtung und dem Lagerelement vorgesehen ist, was die Möglichkeit eröffnet, die Dichtung zur Erhöhung der Dichtwirkung an der Dichtungsstelle unter Druck zu setzen, sodass kein Durchgang geschaffen wird, durch den Wasser eindringen kann, sondern dass vielmehr durch die formschlüssige, in drei Raumrichtungen wirkende Verbindungseinrichtung absolute Dichtigkeit gegenüber eindringender Feuchtigkeit gewährleistet ist, da die Dichtung durch die formschlüssige Verbindungseinrichtung bei entsprechender Krafteinwirkung nicht mehr aus ihrem Sitz herausgehoben werden kann.

So ist vorgesehen, dass die formschlüssige Verbindungseinrichtung eine in dem mindestens einem Lagerelement angeordnete Nut zur Aufnahme der Dichtung umfasst. Durch eine solche Nut, die insbesondere im Querschnitt nach Art eines parallel zur Drehachse des sphärischen Lagers stehenden U ausgebildet ist, ist die Dichtung auf dem Lagerelement formschlüssig fixierbar.

Nach einem weiteren Merkmal der Erfindung ist vorgesehen, dass die formschlüssige Verbindungseinrichtung einen auf das mindestens eine Lagerelement aufsetzbaren Deckel zur Fixierung der Dichtung in der im Wesentlichen U-förmigen Nut umfasst. Mit dem Deckel wird die Dichtung in der U-förmigen Nut gehalten, egal wie die Beanspruchung der Dichtung durch Bewegung der beiden Lagerelemente relativ zueinander ist.

Im Einzelnen ist in Bezug auf die Ausbildung der Dichtung vorgesehen, dass die Dichtung zur Aufnahme durch die U-förmige Nut einen Dichtungsfuß umfasst. Der Dichtungsfuß, der vorteilhaft im Querschnitt nach Art eines Rechtecks ausgebildet ist, kann insofern einerseits durch den Deckel, der insofern im Querschnitt L-förmig ausgebildet ist, und durch die Nut formschlüssig an dem Lagerelement fixiert werden.

Erfindungsgemäß ist vorgesehen, dass die Dichtung im Bereich der U-förmigen Nut eine Gleitringanordnung aufweist, wobei die Gleitringanordnung bei Verdrehen der beiden Lagerelemente relativ zueinander dafür sorgt, dass die Lagerelemente auf der Gleitringanordnung entlang gleiten können. Durch die Gleitringanordnung wird insofern ein Verschleiß der Dichtung verhindert bzw. der Verschleiß vermindert.

Im Einzelnen ist in diesem Zusammenhang vorgesehen, dass die Gleitringanordnung im Einbauzustand zwei spiegelgleiche Gleitringelemente aufweist. Das heißt, die Gleitringanordnung umfasst zwei voneinander getrennte Gleitringelemente, die jeweils für sich gesondert eingebaut werden, was die Montage bzw. Demontage erleichtert. Die Gleitringelemente sind insbesondere auf der Dichtung angeordnet. Vorzugsweise erfassen die Gleitringelemente mindestens die Seitenflächen der Dichtung im Bereich des Dichtungsfußes.

Bevorzugt weisen die Gleitringelemente, insbesondere in dem an den Dichtungsfuß angrenzenden Bereich, in dem die Gleitringelement mit der Dichtung in Kontakt sind, an der der Dichtung zugewandten Seite zusätzliche Haltevorrichtungen auf. Beispielsweise sind diese Haltevorrichtungen als Zahnstruktur ausgebildet, sodass die Dichtung in diesem Bereich zusätzlich gehalten wird. So kann einem Verjüngen der Dichtung in diesem Bereich bei Zugbeanspruchung entgegengewirkt werden. Zusätzlich kann die Haltevorrichtung eine dichtende Funktion haben. Konkret kann die Zahnstruktur als eine Art Labyrinthdichtung wirken.

Die Gleitringelemente bilden hierbei vorteilhaft in sich geschlossene Ringe. Die Gleitringelemente selbst erfassen die Dichtung im Bereich des Dichtungsfußes, nicht aber die Sohle des Dichtungsfußes, also den Teil des Dichtungsfußes, der auf dem Schenkel der U-förmigen Nut in dem ersten konvexen Lagerelement lagert.

Nach einem besonders vorteilhaften Merkmal ist im Bereich der Sohle der Dichtung bzw. des Dichtungsfußes ein Freiraum oder eine Aussparung vorgesehen, wobei der Freiraum entweder in der Sohle des Dichtungsfußes oder in dem Schenkel der U-förmigen Nut vorgesehen sein kann. Dieser Freiraum dient der Aufnahme eines Schmiermittels, zum Beispiel von Vaseline. Die Anordnung des Freiraums entweder in dem einen Schenkel der im Wesentlichen U-förmigen Nut oder in der Sohle des Fußes der Dichtung hat den Vorteil, dass einerseits durch diesen Freiraum, der ringförmig umlaufend ausgebildet ist, die Reibung zwischen der Sohle des Dichtungsfußes einerseits und dem entsprechenden der Sohle gegenüberliegenden Schenkel der U-förmigen Nut andererseits vermindert ist, weil die potentiell zur Verfügung stehende Reibfläche hierbei verkleinert ist. Wenn der Freiraum in Form einer Vertiefung als Reservoir für ein Schmiermittel, zum Beispiel Vaseline, dient, dann wird, wenn durch den Deckel der Dichtungsfuß auf den Schenkel der U-förmigen Nut, der den Freiraum aufweist, gepresst wird, das Gleitmittel herausgedrückt, wobei dann durch dieses, trotz der erhöhten Flächenpressung, die Reibung zwischen dem Dichtungsfuß einerseits und dem Schenkel der U-förmigen Nut andererseits herabsetzt ist. Auch gelangt hierdurch Schmiermittel in den Bereich zwischen den Gleitlagerelementen und dem Lagerelement bzw. dem Deckel. Zusätzlich sorgt das Schmiermittel selbst auch für eine Abdichtung gegen eindringende Feuchtigkeit.

Es wurde bereits darauf hingewiesen, dass durch den Deckel, der im Querschnitt im Wesentlichen L-förmig ausgebildet ist, die Dichtung gepresst in der im Wesentlichen U-förmigen Nut gehalten wird. Dies insofern, als der im Querschnitt in etwa L-förmige Deckel den Dichtungsfuß ebenso zumindest partiell im Bereich des Dichtungsfußes überdeckt, wie auch die liegend angeordnete U-förmige Nut. Hieraus wird deutlich, dass ein Teil des Dichtungsfußes durch die im Wesentlichen U-förmige Nut umgriffen erfasst wird und ein anderer Teil des Dichtungsfußes durch den einen Schenkel des im Wesentlichen im Querschnitt L-förmig ausgebildeten Deckels. Bevorzugt wird der Dichtungsfuß somit zumindest partiell in axialer Richtung, d. h. in Richtung der Achse, um die sich die Dichtung erstreckt, und zumindest partiell in radialer Richtung, d. h. quer zu der Richtung der Achse, um die sich die Dichtung erstreckt, von dem Deckel überdeckt. Bevorzugt ist der Dichtungsfuß somit in drei Raumrichtungen formschlüssig gehalten. Eine relative Drehbewegung zwischen Dichtung und konvexem Lagerelement ist jedoch möglich.

In diesem Zusammenhang kann nach einem besonderen Merkmal der Erfindung vorgesehen sein, dass der rechteckförmige Dichtungsfuß eine giebelförmige Spitze aufweist. Korrespondierend hierzu ist der Deckel ausgebildet. Das heißt, der eine Schenkel des Deckels, der den Dichtungsfuß übergreift, verläuft entsprechend der Schräge der giebelförmigen Spitze. Gleiches gilt in Bezug auf den Schenkel der U-förmigen Nut, die den Dichtungsfuß übergreift. Auch dieser verläuft entsprechend der Schräge der giebelförmigen Spitze des Dichtungsfußes.

Entsprechend ausgebildet sind auch die Gleitringelemente der Gleitringanordnung im Bereich des Dichtungsfußes mit der giebelförmigen Spitze. Das heißt, dass insbesondere dann, wenn die Dichtung auf Zug beansprucht wird, sich der Dichtungsfuß mit der giebelförmigen Spitze in die beiden Gleitringelemente hineinzieht und insofern hierbei die Dichtwirkung verstärkt wird. Somit wird deutlich, dass schlussendlich die Querschnittsform der Gleitringanordnung zu der Ausbildung der im Wesentlichen U-förmigen Nut und dem Deckel korrespondiert.

Der Deckel ist vorteilhaft auf dem Lagerelement fixierbar, was beispielsweise durch umfangsverteilt angeordnete Schrauben erfolgen kann, wobei zusätzlich der Deckel beispielsweise durch einen O-Ring gegenüber dem Lagerelement abgedichtet ist. Denkbar ist auch eine Verschraubung des Deckels auf dem Lagerelement.

Vorteilhaft ist in diesem Zusammenhang vorgesehen, dass das eine erste konvexe Lagerelement die Verbindungseinrichtung für die Dichtung aufweist. Dies deshalb, weil sich herausgestellt hat, dass bei dem sphärischen Lager der eingangs genannten Art an diesem Ende der Dichtung eher mit Feuchtigkeitseintritt zu rechnen ist, als am anderen Ende der Dichtung, das mit dem zweiten konkaven Lagerelement verbunden ist.

In Bezug auf die Anordnung der Dichtung an dem zweiten konkaven Lagerelement ist insofern vorgesehen, dass das zweite konkave Lagerelement die Dichtung zumindest in zwei Raumrichtungen formschlüssig aufnimmt. Im Einzelnen bedeutet dies, dass das zweite konkave Lagerelement eine umlaufende Aussparung zur Aufnahme der Dichtung aufweist, wobei nach einer Ausführungsform die Aussparung Teil einer Mutter sein kann, die auf das zweite konkave Lagerelement aufgeschraubt ist.

Gegenstand der Erfindung ist darüber hinaus ein Gelenkfahrzeug mit einem Gelenk zwischen zwei Fahrzeugen oder Fahrzeugteilen des Gelenkfahrzeugs, das sich durch ein sphärisches Lager der zuvor beschriebenen Art auszeichnet.

Anhand der Zeichnung wird die Erfindung nachstehend beispielhaft näher erläutert. Hierbei zeigt
- Fig. 1: das Gelenk mit dem sphärischen Lager in einer Schnittdarstellung;
- Fig. 2: zeigt schematisch das sphärische Lager einer Gelenkverbindung zwischen zwei gelenkig miteinander verbundenen Fahrzeugen oder Fahrzeugteilen gemäß der Einzelheit II aus Fig. 1;
- Fig. 3: zeigt eine Variante der Ausbildung des Dichtungsfußes in Fig. 2 mit einer giebelförmigen Spitze.

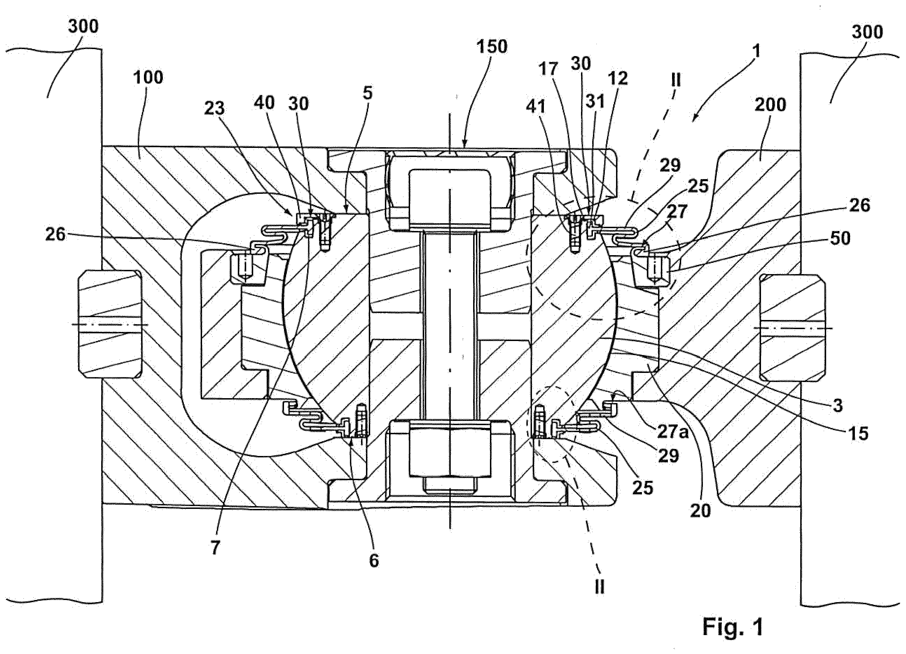

Wie sich aus Fig. 1 ergibt, ist ein erstes Gelenkelement 100 und ein zweites Gelenkelement 200 vorgesehen, die relativ zueinander beweglich sind. Die Gelenkelemente sind endseitig jeweils an den Wagenkästen der Fahrzeugteile 300 eines Gelenkfahrzeugs angeordnet. Das erste Gelenkelement 100 erfasst das erste konvexe Lagerelement 3, wohingegen das zweite Gelenkelement 200 das zweite konkave Lagerelement 20 aufnimmt. Zur Verbindung des Gelenkelementes 100 mit dem konvexen Lagerelement 3 ist die mit 150 bezeichnete Achse vorgesehen.

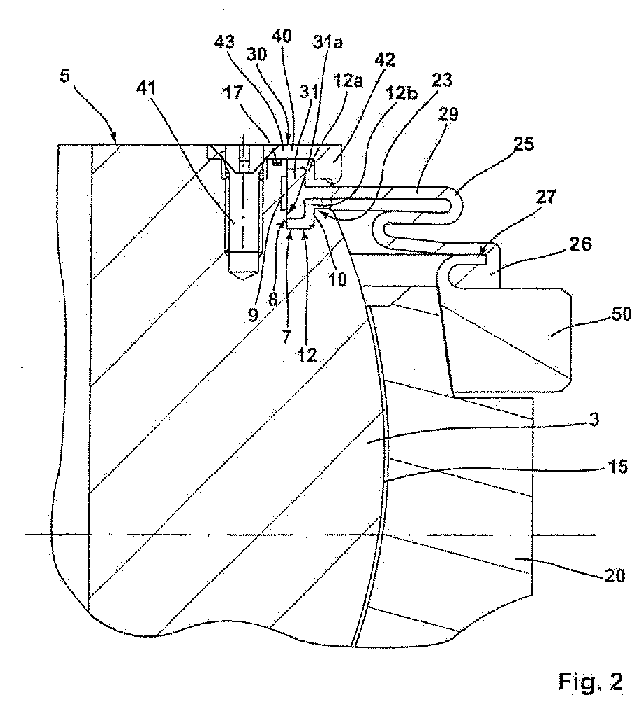

Gegenstand der Erfindung ist nunmehr das sphärische Lager 1. Das sphärische Lager 1 umfasst das erste konvexe Lagerelement 3 und das zweite konkave Lagerelement 20. Das konvexe Lagerelement 3 wird von dem konkaven Lagerelement 20 relativ zu diesem beweglich aufgenommen. Hierzu dient eine Gleitfläche 15 zwischen dem konvexen Lagerelement 3 und dem konkaven Lagerelement 20. Zur Abdichtung der Gleitfläche 15 zwischen dem konvexen Lagerelement 3 und dem konkaven Lagerelement 20 ist zu beiden Seiten, also auf der Oberseite (Pfeil 5) und auf der Unterseite (Pfeil 6) gemäß Fig. 2 jeweils eine Dichtung 25 vorgesehen, wobei die Dichtungen 25 auf der Ober- und der Unterseite jeweils in Bezug auf ihre Ausbildung bzw. Gestaltung und die Anbindung an dem konvexen Lagerelement 3 einerseits und dem konkaven Lagerelement 20 andererseits vom Prinzip her gleich ausgebildet sind (Fig. 2). Die Dichtung 25 hat zwei Enden, und zwar ein erstes Dichtungsende 26, das in einer Aussparung 27, 27a des konkaven Lagerelements 20 lagert, und zweites Dichtungsende 30, das an dem konvexen Lagerelement 3 durch eine Verbindungseinrichtung 23 befestigt ist. Das zweite Dichtungsende 30 der Dichtung 25 zeigt einen im Querschnitt rechteckigen Dichtungsfuß 31, der in einer entsprechend ausgebildeten, in Richtung der Drehachse des sphärischen Lagers 1 ausgerichteten in etwa U-förmigen Nut 7 mit den Schenkeln 8 und 10 in dem konvexen Lagerelement 3 angeordnet ist. Der Dichtungsfuß 31 wird nicht nur durch die U-förmige Nut 7 aufgenommen, sondern gleichfalls noch durch den im Querschnitt L-förmigen Deckel 40 mit den beiden Schenkeln 42 und 43 gehalten, wobei der in der Draufsicht ringförmige Deckel 40 auf dem konvexen Lagerelement 3 aufsetzbar und fixierbar ist. Der Schenkel 42 des L-förmigen Deckels 40 erfasst hierbei die Oberseite des Dichtungsfußes 31 ebenso wie der Schenkel 10 der U-förmigen Nut 7. Insofern ist die Nut 7 bei montiertem Deckel 40 im Querschnitt T-förmig ausgebildet.

Zur Fixierung des Deckels 40 auf dem konvexen Lagerelement 3 sind Schrauben 41 vorgesehen. Zur Abdichtung des Deckels 40 gegenüber dem konvexen Lagerelement 3 dient der O-Ring 17. Zwischen dem rechteckigen Dichtungsfuß 31 der Dichtung 25 und dem Deckel 40 einerseits und der U-förmigen Nut 7 andererseits ist eine Gleitringanordnung 12 mit zwei Gleitringelementen 12a , 12b angeordnet, die zum Beispiel aus einem Thermoplasten als Gleitmaterial ausgebildet sind. Die Gleitringanordnung 12 mit den Gleitringelementen 12a, 12b dient als Schutz für die Dichtung 25 im Bereich des Dichtungsfußes 31, beispielsweise dann, wenn die beiden Lagerelemente relativ zueinander verdreht werden, was geschieht, wenn ein Gelenkfahrzeug mit einem solchen Lager im Gelenk um eine Kurve fährt.

In Zusammenhang mit der Erhöhung der Dichtwirkung ist insbesondere vorgesehen, dass die Gleitringelemente 12a, 12b lediglich die Seitenflächen der Dichtung 25 im Bereich des Dichtungsfußes 31 erfassen, nicht aber die Sohle 31a des Dichtungsfußes 31. Das heißt, im Bereich der Sohle, die insofern auf den Schenkel 8 der im Wesentlichen U-förmigen Nut 7 zu weist, liegt der Dichtungsfuß 31 unmittelbar dem Schenkel 8 des ersten konvexen metallischen Lagerelementes 3 an. Das heißt, dass hier das Material des Dichtungselementes unmittelbar auf dem Metall des ersten konvexen Lagerelements gleitet. Um insofern hier die Reibung zu vermindern, ist vorgesehen, dass in dem Schenkel 8 der U-förmigen Nut 7, der der Sohle 31a des Dichtungsfußes 31 unmittelbar gegenüber liegt, ein Freiraum 9 angeordnet ist. Der Freiraum 9, der sich insofern ringförmig um das erste konvexe Lagerelement erstreckt, dient als Reservoir für ein Gleitmittel, zum Beispiel Vaseline. Wenn insofern durch den L-förmigen Deckel 40, der mit seinem einen Schenkel 42 den Dichtungsfuß 31 der Dichtung 25 partiell übergreift, den Dichtungsfuß auf den entsprechenden Schenkel 8 der U-förmigen Nut 7 drückt, dann wird hierdurch dafür gesorgt, dass das in dem Freiraum 9 befindliche Gleitmittel austritt, und hierdurch die Reibung der Sohle 31a des Dichtungsfußes 31 auf dem Schenkel 8 der U-förmigen Nut 7 vermindert wird. Gleichzeitig wird durch den Freiraum 9 erreicht, dass die Gleitfläche des Schenkels 8 der U-förmigen Nut 7 verringert wird, was ebenfalls die Reibung vermindert. Das Schmiermittel wird allerdings auch in den Bereich zwischen den Gelenkringelementen (12a, 12b) und dem Lagerelement (3) gelangen.

Die Dichtung 25 weist darüber hinaus eine mäanderförmige Dichtungsreserve 29 auf, die dafür sorgt, dass bei Bewegung des konvexen Lagerelementes 3 relativ zu dem konkaven Lagerelement 20 dieser Bewegung durch die Dichtung nachgegeben werden kann.

Auf der Unterseite des sphärischen Lager, die durch den Pfeil 6 gekennzeichnet ist, ist die Dichtung 25 in gleicher Weise ausgebildet, wie auf der Oberseite des sphärischen Lagers, die durch den Pfeil 5 gekennzeichnet ist.

Es wurde bereits darauf hingewiesen, dass das konkave Lagerelement 20 zur Aufnahme des ihm zugeordneten Endes der Dichtung 25 jeweils auf der Oberseite und der Unterseite (Pfeile 5 und 6) über eine Aussparung 27, 27a verfügt. Die Aussparung 27 auf der Oberseite (Pfeil 5) des sphärischen Lagers 1 ist hierbei Bestandteil einer Mutter 50, die auf das konkave Lagerelement 20 aufgeschraubt ist. Die Aussparung 27a auf der Unterseite (Pfeil 6) des sphärischen Lagers 1 ist unmittelbar Teil des zweiten konkaven Lagerelementes 20.

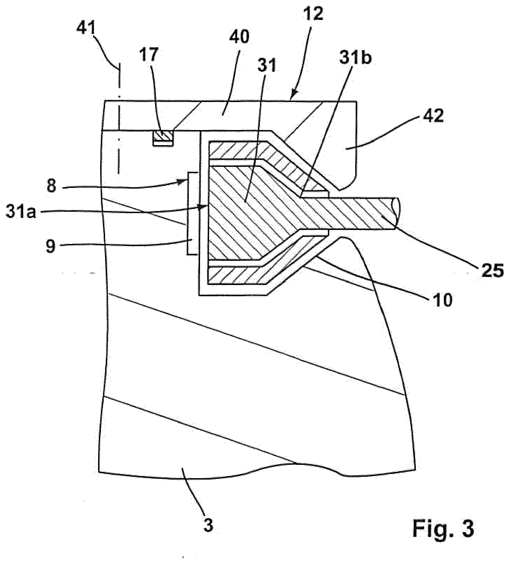

Fig. 3 zeigt eine Variante des Dichtungsfußes 31, der einen Giebel 31b aufweist. Die Gleitringelemente 12a, 12b sind hierbei ebenfalls giebelförmig ausgebildet, wobei korrespondierend der Schenkel 10 der hierzu im Wesentlichen U-förmigen Nut 7 schrägstehend ausgebildet ist, was ebenso für die Ausbildung des Deckels 40 mit dem Schenkel 42 gilt.

### Bezugszeichenliste:

- 1: sphärisches Lager
- 3: erstes konvexes Lagerelement
- 5: Pfeil (Oberseite)
- 6: Pfeil (Unterseite)
- 7: U-förmige Nut
- 8: Schenkel der U-förmigen Nut
- 9: ringförmiger Freiraum
- 10: Schenkel der U-förmigen Nut
- 12: Gleitringanordnung
- 12a: Gleitringelement
- 12b: Gleitringelement
- 15: Gleitfläche
- 17: O-Ring
- 20: zweites konkaves Lagerelement
- 23: Verbindungseinrichtung
- 25: Dichtung
- 26: erstes Dichtungsende
- 27: Aussparung
- 27a: Aussparung
- 29: mäanderförmige Dichtungsreserve
- 30: zweites Dichtungsende
- 31: Dichtungsfuß
- 31a: Sohle des Dichtungsfußes
- 31b: Giebel des Dichtungsfußes
- 33: Freiraum
- 40: Deckel
- 41: Schraube
- 42: Schenkel des Deckels
- 43: Schenkel des Deckels
- 50: Mutter
- 100: erstes Gelenkelement
- 150: Achse
- 200: zweites Gelenkelement
- 300: Fahrzeugteil

## Patentansprüche

1. Sphärisches Lager (1) als gelenkige Verbindung zwischen zwei Fahrzeugen oder Fahrzeugteilen, umfassend ein erstes konvexes und ein zweites konkaves Lagerelement (3, 20), wobei die Lagerelemente (3, 20) relativ zueinander beweglich miteinander verbunden sind, wobei zwischen den Lagerelementen (3, 20) mindestens eine Gleitfläche (15) angeordnet ist, wobei die mindestens eine Gleitfläche (15) durch mindestens eine umlaufende Dichtung (25) abgedichtet ist, die mit beiden Lagerelementen (3, 20) in Verbindung steht, wobei die umlaufende Dichtung (25) zur Verbindung mit mindestens einem der Lagerelemente (3, 20) durch zumindest eine formschlüssig wirkende Verbindungseinrichtung (23) gehalten ist, wobei die formschlüssige Verbindungseinrichtung (23) eine in dem mindestens einen Lagerelement (3, 20) angeordnete Nut (7) zur Aufnahme der Dichtung (25) umfasst,
**dadurch gekennzeichnet,**
**dass** die Dichtung (25) im Bereich der Nut (7) eine Gleitringanordnung (12) aufweist.

2. Sphärisches Lager (1) nach Anspruch 1,
**dadurch gekennzeichnet,**
**dass** die formschlüssige Verbindungseinrichtung (23) einen auf das mindestens eine Lagerelement (3, 20) aufsetzbaren Deckel (40) zur Fixierung der Dichtung (25) in der Nut (7) umfasst.

3. Sphärisches Lager (1) nach einem der voranstehenden Ansprüche, **dadurch gekennzeichnet, dass** die Dichtung (25) zur Aufnahme durch die Nut (7) mindestens einen Dichtungsfuß (31) umfasst.

4. Sphärisches Lager (1) nach einem der voranstehenden Ansprüche,
**dadurch gekennzeichnet,**
**dass** die Gleitringanordnung (12) zwei Gleitringelemente (12a, 12b) aufweist.

5. Sphärisches Lager (1) nach einem der Ansprüche 3 oder 4 wenn abhängig von Anspruch 3,
**dadurch gekennzeichnet,**
**dass** im Bereich der Sohle (31a) des Dichtungsfußes (31) der Dichtung (25) ein Freiraum (9) vorgesehen ist, der optional ein Gleitmittel, zum Beispiel Vaseline, aufweist.

6. Sphärisches Lager (1) nach Anspruch 5,
**dadurch gekennzeichnet,**
**dass** der Freiraum (9) in der Sohle (31a) des Dichtungsfußes (31) oder in dem Schenkel (8) der U-förmigen Nut (7) vorgesehen ist, der Teil des konvexen Lagerelementes (3) ist.

7. Sphärisches Lager (1) nach einem der Ansprüche 4 bis 6,
**dadurch gekennzeichnet,**
**dass** die Gleitringelemente (12a, 12b) einen geschlossenen Ring bilden.

8. Sphärisches Lager (1) nach Anspruch 2 und 3 oder 2 und 4 bis 6 wenn abhängig von 3,
**dadurch gekennzeichnet,**
**dass** der Deckel (40) im Querschnitt in etwa L-förmig ausgebildet ist, und zumindest den Dichtungsfuß (31) partiell überdeckt.

9. Sphärisches Lager (1) nach einem der Ansprüche 2 bis 8,
**dadurch gekennzeichnet,**
**dass** der aufsetzbare Deckel (40) gegenüber dem mindestens einen Lagerelement z. B. durch einen O-Ring (17) abgedichtet ist.

10. Sphärisches Lager (1) nach einem der Ansprüche 3 bis 9,
**dadurch gekennzeichnet,**
**dass** der Dichtungsfuß (31) auf dem der Sohle (31a) gegenüberliegenden Ende einen Giebel (31b) aufweist.

11. Sphärisches Lager nach (1) einem der voranstehenden Ansprüche,
**dadurch gekennzeichnet,**
**dass** das zweite konkave Lagerelement (20) eine umlaufende Aussparung (27, 27a) zur Aufnahme der Dichtung (25) aufweist und das zweite konkave Lagerelement (20) die Dichtung (25) zumindest in zwei Raumrichtungen formschlüssig aufnimmt.

12. Sphärisches Lager (1) nach Anspruch 11,
**dadurch gekennzeichnet,**
**dass** die Aussparung (27, 27a) Teil einer Mutter (50) ist, die auf das zweite konkave Lagerelement (20) aufschraubbar ist.

13. Gelenkfahrzeug mit einem Gelenk zwischen zwei Fahrzeugteilen des Gelenkfahrzeugs
**gekennzeichnet durch**
ein sphärisches Lager (1) gemäß einem oder mehrerer der Ansprüche 1 bis 12.

## Claims

1. A spherical bearing (1) as an articulated connection between two vehicles or vehicle parts, including a first convex and a second concave bearing element (3, 20), wherein the bearing elements (3, 20) are connected to one another so as to be displaceable relative to each other, wherein at least one sliding surface (15) is disposed between the bearing elements (3, 20), wherein the at least one sliding surface (15) is sealed by at least one circumferential seal (25), which is in connection with both bearing elements (3, 20), wherein the circumferential seal (25) is held by at least one form-fitting connection arrangement (23) in order to be connected with at least one of the bearing elements, wherein the form-fitted connection arrangement (23) includes a groove (7) disposed in the at least one bearing element (3, 20) for receiving the seal (25),
**characterized in that**
the seal (25) comprises a sliding ring arrangement (12) in the area of the groove (7).

2. The spherical bearing (1) according to claim 1,
**characterized in that**
the form-fitted connection arrangement (23) includes a cover (40) which can be placed on the at least one bearing element (3, 20) for fixing the seal (25) in the groove (7).

3. The spherical bearing (1) according to one of the afore-mentioned claims,
**characterized in that**
the seal (25) includes at least one seal base (31) to be received by the groove (7).

4. The spherical bearing (1) according to one of the afore-mentioned claims,
**characterized in that**
the sliding ring arrangement (12) comprises two sliding ring elements (12a, 12b).

5. The spherical bearing (1) according to one of the claims 2 or 4 if dependent on claim 3,
**characterized in that**
a free space (9) is provided in the area of the bottom (31a) of the seal base (31) of the seal (25), which optionally comprises a lubricant, e.g. Vaseline.

6. The spherical bearing (1) according to claim 1,
**characterized in that**
the free space (9) is provided in the bottom (31a) of the seal base (31) or in the branch (8) of the U-shaped groove (7) that is part of the convex bearing element (3).

7. The spherical bearing (1) according to one of the claims 4 to 6,
**characterized in that**
the sliding ring elements (12a, 12b) form a closed ring.

8. The spherical bearing (1) according to claim 2 and 3 or 2 and 4 to 6 if dependent on 3,
**characterized in that**
the cover (40) as an approximately L-shaped cross-section, and partially covers at least the seal base (31).

9. The spherical bearing (1) according to one of the claims 2 to 8,
**characterized in that**
the attachable cover (40) is sealed off against the at least one bearing element, e.g. by an O-ring.

10. The spherical bearing (1) according to one of the claims 3 to 9,
**characterized in that**
the seal base (31) has a gable (31b) at the end opposite the bottom (31a).

11. The spherical bearing (1) according to one of the afore-mentioned claims,
**characterized in that**
the second concave bearing element (20) has a circumferential recess (27, 27a) for receiving the seal and the second concave bearing element (20) receives the seal in a form-fitting manner in at least two spatial directions.

12. The spherical bearing (1) according to claim 11,
**characterized in that**
the recess (27, 27a) is part of a nut (50) that can be screwed onto the second concave bearing element (20).

13. An articulated vehicle with an articulation between two vehicle parts of the articulated vehicle
**characterized by**
a spherical bearing (1) according to one or several of claims 1 to 12.

## Revendications

1. Palier sphérique (1) en tant que connexion articulée entre deux véhicules ou parties de véhicules, comprenant un premier élément de palier convexe et un second élément de palier concave (3, 20), où les éléments de palier (3, 20) sont connectés l'un à l'autre de manière à pouvoir se déplacer l'un par rapport à l'autre, où au moins une surface de glissement (15) est disposée entre les éléments de palier (3, 20), où l'au moins une surface de glissement (15) est étanchéifiée par au moins au moins un joint d'étanchéité (25) circonférentiel qui est connecté aux deux éléments de palier (3, 20), où, pour sa connexion avec au moins un des éléments de palier (3, 20) le joint d'étanchéité (25) circonférentiel est maintenu par au moins un dispositif de connexion (23à agissant par liaison de forme, où le dispositif de connexion (23) à liaison de forme comprend une rainure (7) disposée dans l'au moins un élément de palier (3, 20) pour recevoir le joint d'étanchéité (25),
**caractérisé en ce que**
le joint d'étanchéité (25) comprend un dispositif d'anneau de glissement (12) dans la région de la rainure (7).

2. Palier sphérique (1) selon la revendication 1,
**caractérisé en ce que**
le dispositif de connexion (23) à liaison de forme comprend un couvercle (40) pouvant être placé sur l'au moins un élément de palier (3, 20) afin de fixer le joint d'étanchéité (25) dans la rainure (7).

3. Palier sphérique (1) selon l'une des revendications précédentes,
**caractérisé en ce que**
le joint d'étanchéité (25) comprend au moins un pied de joint (31) destiné à être reçu par la rainure (7).

4. Palier sphérique (1) selon l'une des revendications précédentes,
**caractérisé en ce que**
le dispositif d'anneau de glissement (12) comporte deux éléments d'anneau de glissement (12a, 12b).

5. Palier sphérique (1) selon l'une des revendications 3 ou 4 si elle dépend de la revendication 3,
**caractérisé en ce que**
un espace libre (9) comportant optionnellement un lubrifiant, par exemple de la vaseline, est prévu dans la région de la base (31a) du pied de joint (31) du joint d'étanchéité (25).

6. Palier sphérique (1) selon la revendication 5,
**caractérisé en ce que**
l'espace libre (9) est prévu dans la base (31a) du pied de joint (31) ou dans la branche (8) de la rainure (7) en forme de U qui fait partie de l'élément de palier (3) convexe.

7. Palier sphérique (1) selon l'une des revendications 4 à 6,
**caractérisé en ce que**
les éléments d'anneau de glissement (12a, 12b) forment un anneau fermé.

8. Palier sphérique (1) selon les revendications 2 et 3 ou 2 et 4 à 6 si elle dépend de la revendication 3,
**caractérisé en ce que**
le couvercle (40) présente une section transversale approximativement en forme de L et recouvre partiellement au moins le pied de joint (31).

9. Palier sphérique (1) selon l'une des revendications 4 à 6,
**caractérisé en ce que**
le couvercle (40) pouvant être posé est étanchéifié par rapport à l'au moins un élément de palier par exemple par un joint torique (17).

10. Palier sphérique (1) selon l'une des revendications 3 à 9,
**caractérisé en ce que**
le pied de joint (31) comporte un gâble à l'extrémité opposée à la base.

11. Palier sphérique (1) selon l'une des revendications précédentes,
**caractérisé en ce que**
le deuxième élément de palier (20) concave comporte un évidement circonférentiel (27, 27a) destiné à recevoir le joint d'étanchéité (25) et le deuxième élément de palier (20) concave reçoit le joint d'étanchéité (25) par liaison de forme dans au moins deux directions spatiales.

12. Palier sphérique (1) selon la revendication 11,
**caractérisé en ce que**
l'évidement (27, 27a) fait partie d'un écrou (50) qui peut être vissé sur le deuxième élément de palier (20) concave.

13. Véhicule articulé avec une articulation entre deux parties de véhicule du véhicule articulé
**caractérisé par**
un palier sphérique (1) selon l'une ou plusieurs des revendications 1 à 12.
